# EUROPÄISCHE PATENTSCHRIFT

(11) **EP 2 816 695 B1**
(45) Veröffentlichungstag und Bekanntmachung des Hinweises auf die Patenterteilung: **05.10.2016**
(21) Anmeldenummer: 13305818.0
(22) Anmeldetag: 18.06.2013
(51) Int. Cl.: H02G 15/34, H01B 12/06, H02G 1/08

(54) **Verfahren zur Herstellung eines supraleitfähigen Kabels**
Method for producing a superconducting cable
Procédé de fabrication d'un câble supraconducteur

(43) Veröffentlichungstag der Anmeldung: 24.12.2014
(73) Patentinhaber: Nexans, 75008 Paris (FR)
(72) Erfinder: Marzahn, Erik, 30853 Langenhagen (DE); Stemmle, Mark, 30625 Hannover (DE)
(74) Vertreter: Döring, Roger

(56) Entgegenhaltungen:
- EP-A2- 1 480 231
- JP-A- 2007 265 697
- US-A1- 2010 285 968

## Beschreibung

Die Erfindung bezieht sich auf ein Verfahren zur Herstellung eines supraleitfähigen Kabels gemäß dem Oberbegriff des Patentanspruchs 1.

Ein solches Kabel geht beispielsweise aus der US 2010/0285968 A1 hervor.

Ein supraleitfähiges Kabel hat elektrische Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Geeignete supraleitfähige Materialien sind beispielsweise oxidische Materialien auf Basis seltener Erden (ReBCO), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Es gibt aber auch supraleitfähige Materialien, wie beispielsweise Magnesiumdiborid, die auf noch tiefere Temperaturen abgekühlt werden müssen, wenn sie in den supraleitfähigen Zustand übergehen sollen. Geeignete Kühlmittel für all diese Materialien sind beispielsweise Stickstoff, Helium, Neon und Wasserstoff oder Gemische dieser Stoffe.

Beim Betrieb einer Anordnung mit mindestens einem supraleitfähigen Kabel wird dasselbe in bekannter Technik in einem Kryostat angeordnet, der aus mindestens einem thermisch isolierten Rohr besteht und durch den ein für das eingesetzte supraleitfähige Material geeignetes Kühlmittel geleitet wird, mit Vorteil eines der im Vorangehenden angeführten Kühlmittel. Das Kabel wird zum Erreichen des supraleitfähigen Zustands innerhalb des Kryostats erheblich abgekühlt, wodurch es infolge thermischer Kontraktion kürzer wird. Um die Funktionsfähigkeit der Übertragungsstrecke zu gewährleisten, müssen Vorkehrungen getroffen werden, durch welche die Verkürzung des Kabels so ausgeglichen werden kann, daß sie sich nicht störend auf den Kryostat bzw. das Kabel einerseits sowie auf an den Kryostat bzw. das Kabel angeschlossene Aggregate andererseits auswirkt.

Bei dem Verfahren nach der EP 1 720 176 B1 wird ein supraleitfähiges Kabel bei Raumtemperatur durch ein kreuzartiges Netzwerk aus zugfesten Drähten, die beispielsweise aus Invarstahl bestehen und punktweise mit dem Kabel verbunden sind, so verformt, daß es in Form einer Welle verläuft. Das supraleitfähige Kabel wird in dieser welligen Form in einen aus zwei konzentrisch zueinander angeordneten Rohren, zwischen denen eine Vakuumisolierung angebracht ist, bestehenden Kryostat eingebracht, durch welchen beim Betrieb der entsprechenden Anordnung ein Kühlmittel geleitet wird. Das beim Abkühlen kürzer werdende Kabel geht in eine gestreckte Form über, ohne daß dabei eine mechanische Belastung des Kryostat bzw. angeschlossener Aggregate entsteht. Dieses Verfahren ist praktisch durchführbar, es erfordert jedoch einen erheblichen Aufwand.

Die eingangs erwähnte US 2010/0285968 A1 beschreibt ein Verfahren, mit dem thermische Kontraktionen eines supraleitfähigen Kabels ausgeglichen werden sollen. Das Kabel hat einen rohrförmigen Träger, um den herum zwei durch eine Isolierschicht getrennte supraleitfähige Leiter angeordnet sind. In dem Träger wird ein zugfester Strang angeordnet, der nach dem Verlegen des Kabels an beiden Enden beispielsweise mittels Klammern festgelegt wird. Mittels des Strangs werden die Enden des Kabels in axialer Richtung so zusammengedrückt, daß die Leiter an diesen Enden mit entsprechender Verkürzung wellenförmig verlaufen.

Der Erfindung liegt die Aufgabe zugrunde, ein Verfahren zur Herstellung eines supraleitfähiges Kabel anzugeben, daß ein supraleitfähiges Kabel auf einfache Weise und mit wenig Aufwand so gestaltet werden kann, daß temperaturabhängige Längenänderungen desselben ausgeglichen werden können.

Diese Aufgabe wird entsprechend den kennzeichnenden Merkmalen des Patentanspruchs 1 gelöst.

Dieses Verfahren ist einfach und ohne großen Montageaufwand durchführbar. Es wird lediglich ein supraleitfähiges Kabel benötigt, das unabhängig von seinem Aufbau und insbesondere unabhängig von der Anzahl seiner supraleitfähigen Leiter einen rohrförmigen, zentralen Träger hat. In den Träger wird zunächst mindestens ein zugfester Strang eingezogen, der ohne besondere Maßgenauigkeit nur so lang sein muß, daß er an beiden Enden des Kabels vorhanden ist. Der Strang kann beispielsweise aus Stahl oder aus einem zugfesten Kunststoff bestehen. Das mit dem zugfesten Strang bestückte Kabel wird dann mit herkömmlichen Einrichtungen auf eine aus einem Kern und zwei denselben seitlich begrenzenden Flanschen bestehende Spule aufgewickelt. Der Strang legt sich dabei an die dem Kern der Spule zugewandte innere Oberfläche des Trägers an. Daraufhin wird der Strang an beiden Enden des supraleitfähigen Kabels fest und unverrückbar an demselben befestigt, mit Vorteil an dem Träger des Kabels.

Abschließend wird das supraleitfähige Kabel wieder von der Spule abgewickelt. Es hat dann einen etwa linearen Verlauf. Der zugfeste Strang wird durch den Abwickelvorgang geradlinig ausgerichtet. Er ist dabei zwischen den beiden Festpunkten an den Enden des Kabels kürzer als dasselbe, und zwar um einen Betrag, der durch den Abstand des Strangs von der Achse bzw. der neutralen Phase des Kabels bestimmt wird. Der Strang hält daher beim Abwickeln des Kabels von der Spule dessen Enden fest, so daß das Kabel wegen seiner gegenüber dem Strang größeren Länge verformt wird. Diese größere Länge kann beispielsweise so umgesetzt werden, daß das Kabel zwischen seinen Enden etwa wellenförmig verläuft.

Das wellenförmig verformte supraleitfähige Kabel kann anschließend oder auch direkt beim Abwickeln von der Spule in einen Kryostat eingebracht werden. Es kann aber auch schon vor dem Festlegen des zugfesten Strangs in einem Kryostat angeordnet werden, der mit dem umschlossenen Kabel auf eine Spule aufgewickelt wird. Auch bei dieser Ausführungsform wird der Strang nach dem Aufwickeln des Kryostats auf die Spule an beiden Enden des Kabels unverrückbar festgelegt.

Ein supraleitfähiges Kabel wird bei seiner Abkühlung von Raumtemperatur auf Betriebstemperatur beispielsweise im Bereich zwischen 0,3 % und 0,5 % kürzer. Das bedeutet beispielsweise bei einer Länge des Kabels von 600 m eine Verkürzung auf 598 m bzw. auf 597 m. Die jeweiligen Gegebenheiten können beispielsweise durch den Durchmesser des Trägers bzw. die lichte Weite desselben mit einem variablen Abstand des zugfesten Strangs von der Achse des Kabels berücksichtigt werden. Es ist auch möglich, den zugfesten Strang mit einer definierten Lose im Träger anzuordnen, so daß er beim Abwickeln des Kabels von der Spule erst mit einer entsprechenden Verzögerung in seinen geradlinigen Verlauf übergeht.

Um eine möglicherweise auftretende Behinderung der Bewegung des supraleitfähigen Kabels beim Abkühlen desselben durch den zugfesten Strang auszuschließen, wird derselbe zweckmäßig nach dem Abwickeln des Kabels von der Spule zumindest an einem Ende des Kabels von demselben gelöst. Der Strang wird mit Vorteil nach dem Abwickeln des Kabels von der Spule aus dem Träger herausgezogen. Beides wird mit Vorteil erst dann ausgeführt, wenn das Kabel an seinen Enden an Aggregaten einer Übertragungsstrecke fixiert ist.

Das Verfahren nach der Erfindung wird anhand der Zeichnungen als Ausführungsbeispiel erläutert.

Es zeigen:
Fig. 1 einen Querschnitt durch ein einen rohrförmigen, zentralen Träger aufweisendes supraleitfähiges Kabel in schematischer Darstellung.
Fig. 2 eine Spule mit einem aufgewickelten supraleitfähigen Kabel.
Fig. 3 ein Ende des Trägers des Kabels nach Fig. 1.
Fig. 4 schematisch den Verlauf des Trägers nach dem Abwickeln des Kabels von der Spule.
Fig. 5 einen Querschnitt durch einen Kryostat mit darin befindlichem supraleitfähigen Kabel.
Fig. 6 ebenfalls schematisch den Verlauf des Trägers nach dem Abkühlen des Kabels.

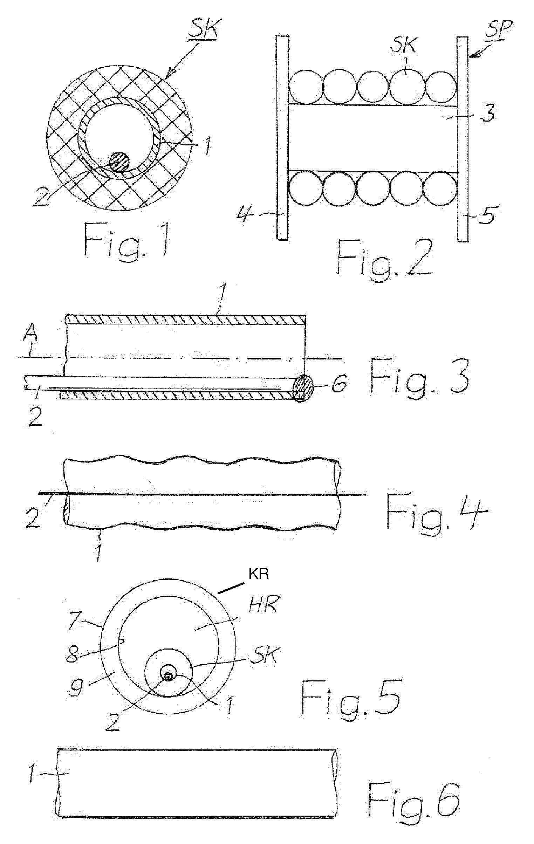

In Fig. 1 ist schematisch ein Querschnitt eines supraleitfähigen Kabels SK dargestellt, das einen rohrförmigen, zentralen Träger 1 hat. Die Elemente des Kabels SK umgeben den Träger 1, wobei die innerste Schicht desselben am Träger 1 anliegt. Der Aufbau des Kabels SK ist in weiten Grenzen variabel. Es muß als Kabel mit warmem Dielektrikum nur einen supraleitfähigen Leiter und als Kabel mit kaltem Dielektrikum einen supraleitfähigen Leiter und eine denselben umgebende Isolierung (Dielektrikum) haben. Auf den Aufbau des Kabels wird daher nicht genauer eingegangen.

Der Träger 1 besteht aus Metall, wie beispielsweise Stahl oder Kupfer. In dem Träger 1 ist ein zugfester Strang 2 angeordnet, der beispielsweise aus Stahl oder einem zugfesten Kunststoff besteht. Es können auch zwei oder mehr zugfeste Stränge im Träger 1 angebracht sein. In der folgenden Beschreibung wird nur die Version mit einem zugfesten Strang 2 berücksichtigt. Der Strang 2 muß mindestens so lang wie das Kabel SK sein, damit er an beiden Enden desselben vorhanden ist. Zweckmäßig ist der Strang 2 länger als das Kabel SK, so daß er an beiden Enden aus demselben herausragt.

Zur Durchführung des Verfahrens nach der Erfindung wird beispielsweise das Kabel SK mit im Träger 1 befindlichem Strang 2 bei Raumtemperatur in mindestens einer Lage auf eine Spule SP aufgewickelt, die aus einem Kern 3 und zwei denselben seitlich begrenzenden Flanschen 4 und 5 besteht. In Fig. 2 ist nur eine Lage des aufgewickelten Kabels SK in Form von Kreisen eingezeichnet, ohne genauere Einzelheiten. Je nach Länge des Kabels SK kann es auch in zwei oder mehr übereinander liegenden Lagen auf die Spule SP aufgewickelt sein. Der Strang 2 legt sich bei auf die Spule SP aufgewickeltem Kabel SK an die innere Oberfläche des Trägers 1 an, welche dem Kern 3 der Spule SP zugewandt ist. Er hat dadurch einen vom Durchmesser bzw. der lichten Weite des Trägers 1 abhängigen Abstand zur Achse A desselben.

Wenn das Kabel SK in seiner ganzen Länge auf die Spule SP aufgewickelt ist, wird der zugfeste Strang 2 an beiden Enden des Kabels SK fest und unverrückbar mit demselben verbunden, vorzugsweise mit dessen Träger 1. Das ist in Fig. 3 für ein Kabelende angedeutet, in welcher nur der Träger 1 und der Strang 2 angedeutet sind. Die Verbindungsstelle 6 zwischen beiden Teilen ist in Fig. 3 nur schematisch angedeutet. Je nach Grad der "Welligkeit" des Kabels SK, die dasselbe nach dem Abwickeln von der Spule SP haben soll, kann der Strang 2 beim Festlegen am Kabel SK an dessen beiden Enden straff gezogen, aber auch mit einer definierten Lose im Träger 1 angeordnet werden.

Wenn der Strang 2 an beiden Enden mit dem Kabel SK bzw. dessen Träger 1 verbunden ist, kann das Kabel SK von der Spule SP abgewickelt werden. Weil der Strang 2 mit Abstand zur Achse A des Kabels SK bzw. zur neutralen Phase desselben im Träger 1 liegt, ist er zwischen den beiden Festpunkten an den Enden des Kabels SK kürzer als dasselbe. Er hält das Kabel SK daher beim Abwickeln desselben von der Spule SP an beiden Enden fest, so daß das Kabel SK seine dabei entstehende "Überlänge" durch entsprechende Verformung zwischen den beiden Festpunkten unterbringen muß. Es wird dabei entsprechend der Darstellung in Fig. 4 mit Vorteil wellenförmig verformt. Das ist in Fig. 4 nur durch zwei wellenförmige Linien angedeutet, welche den Träger 1 darstellen sollen. Der Strang 2 ist in Fig. 4 als Gerade eingezeichnet.

Das Kabel SK kann in der aus Fig. 4 ersichtlichen Form beispielsweise in einen in Fig. 5 schematisch dargestellten Kryostat KR eingebracht werden. In der Ausführungsform nach Fig. 5 besteht der Kryostat KR aus zwei konzentrisch zueinander angeordneten Rohren 7 und 8 aus Metall, insbesondere aus Edelstahl, zwischen denen eine Vakuumisolierung 9 angebracht ist. Der Kryostat KR kann auch aus nur einem thermisch isolierten Rohr bestehen. Er kann um das wellige Kabel SK herumgeformt werden. Es ist jedoch auch möglich, das wellige Kabel SK in einen vorgefertigten Kryostat einzuziehen oder einzuschieben.

Der Kryostat KR umschließt neben dem Kabel SK auch einen Hohlraum HR, durch welchen beim Betrieb der entsprechenden Anordnung ein Kühlmittel geleitet wird. Dabei verkürzt sich das Kabel SK, so daß es in eine gestreckte Form übergeht, so wie es wieder nur für den Träger 1 in Fig. 6 angedeutet ist.

Damit die Bewegung des Kabels SK beim Abkühlen durch den Strang 2, der dann ebenfalls abgekühlt wird, mit Sicherheit nicht behindert wird, ist es zweckmäßig, den Strang 2 zumindest an einem Ende des Kabels SK vorher von demselben bzw. von seinem Träger 1 zu lösen. Mit Vorteil wird der Strang 2 vor dem Abkühlen des Kabels SK aus demselben entfernt. Er ist daher in Fig. 6 nicht mit eingezeichnet. Beide Versionen der Behandlung des Strangs 2 werden zweckmäßig erst dann durchgeführt, wenn das Kabel SK an seinen beiden Enden an Aggregaten einer Übertragungsstrecke fixiert ist.

Das Verfahren nach der Erfindung kann in einer anderen Ausführungsform auch so durchgeführt werden, daß das Kabel SK mit im Träger 1 liegendem Strang 2 zunächst in einen Kryostat KR eingebracht wird. Der so bestückte Kryostat KR wird dann analog zu Fig. 2 auf eine Spule aufgewickelt. Die Festlegung des Stranges 2 am Kabel SK bzw. an dessen Träger 1 und die weitere Behandlung des bei dieser Ausführungsform bereits im Kryostat KR liegenden Kabels SK werden analog zur vorangehenden Beschreibung durchgeführt.

## Patentansprüche

1. Verfahren zur Herstellung eines supraleitfähigen Kabels (SK), das mit Mitteln zum Ausgleich von temperaturbedingten Längenänderungen ausgerüstet ist, die beim Abkühlen des Kabels von Raumtemperatur auf Arbeitstemperatur und umgekehrt entstehen, bei welchem ein supraleitfähiges Kabel (SK) mit einem rohrförmigen, zentralen Träger (1) verwendet wird, der mindestens von einem supraleitfähigen Leiter umgeben ist, und bei welchem in dem Träger (1) auf dessen ganzer Länge mindestens ein zugfester Strang (2) angeordnet wird, **dadurch gekennzeichnet**
- **daß** das Kabel (SK) zunächst einschließlich Strang (2) bei Raumtemperatur auf eine Spule (SP) aufgewickelt wird,
- **daß** der Strang (2) anschließend an beiden Enden des Kabels (SK) unverrückbar an demselben festgelegt wird und
- **daß** das Kabel (SK) abschließend von der Spule (SP) abgewickelt wird.

2. Verfahren nach Anspruch 1, **dadurch gekennzeichnet, daß** das von der Spule (SP) abgewickelte Kabel (SK) in einen rohrförmigen Kryostat (KR) eingebracht wird, der mindestens ein thermisch isoliertes Rohr aufweist, welches einen Hohlraum (HR) zum Durchleiten eines Kühlmittels umschließt.

3. Verfahren nach Anspruch 1, **dadurch gekennzeichnet,**
- **daß** das Kabel (SK) mit im Träger (1) angeordnetem zugfestem Strang (2) zunächst in einen Kryostat (KR) eingebracht wird, der mindestens ein thermisch isoliertes Rohr aufweist,
- **daß** der so bestückte Kryostat (KR) danach auf eine Spule aufgewickelt,
- **daß** der Strang (2) anschließend an beiden Enden des Kabels (SK) unverrückbar an demselben festgelegt wird und
- **daß** der Kryostat (KR) abschließend von der Spule abgewickelt wird.

4. Verfahren nach einem der Ansprüche 1 bis 3, **dadurch gekennzeichnet, daß** der zugfeste Strang (2) nach dem Abwickeln des Kabels (SK) bzw. des Kryostats (KR) von der Spule zumindest an einem Ende des Kabels von demselben gelöst wird.

5. Verfahren nach einem der Ansprüche 1 bis 3, **dadurch gekennzeichnet, daß** der zugfeste Strang (2) nach dem Abwickeln des Kabels (SK) bzw. des Kryostats (KR) von der Spule aus dem Träger (1) herausgezogen wird.

6. Verfahren nach Anspruch 4 oder 5, **dadurch gekennzeichnet, daß** das Kabel (SK) erst an seinen Enden an Aggregaten einer Übertragungsstrecke fixiert wird, bevor der zugfeste Strang (2) vom Kabel (SK) gelöst bzw. aus dem Träger (1) herausgezogen wird.

## Claims

1. Method of manufacturing of a superconductive cable (SK), which is equipped with means for compensating the length changes which are created when the cable is cooled down from room temperature to work temperature and vice-versa, by which a superconductive cable (SK) is used, which comprises a tubular central carrier (1) which is surrounded by at least one superconductive conductor, and by which at least one tension proof strand (2) is placed in the carrier (1) over the entire length of the same, **characterized in**
- **that** the cable (SK) together with the strand (2) is initially wound onto a drum (SP) at room temperature,
- **that** the strand (2) is subsequently immovably fastened to both ends of the cable (SK) and
- **that** the cable (SK) finally is wound off from the drum (SP).

2. Method according to claim 1, **characterized in that** the cable (SK) which is wound off from the drum (SP) is introduced into a tubular cryostat (KR), which has at least one thermally insulated pipe, which surrounds a hollow space (HR) for conducting a cooling agent therethrough.

3. Method according to claim 1, **characterized in**
- **that** the cable (SK) comprising the tension proof strand (2) within its carrier (1) is initially introduced into a cryostat (KR), which has at least one thermally insulated pipe,
- **that** the cryostat (KR) equipped in this manner is subsequently wound onto a drum,
- **that** the strand (2) is subsequently immovably secured to both ends of the cable (SK) and
- **that** the cryostat (KR) is subsequently wound off from the drum.

4. Method according to one of the claims 1 to 3, **characterized in that** the tension-proof strand (2) after the winding off of the cable (SK) or the cryostat (KR) is separated at least at one end of the cable from the cable.

5. Method according to one of the claims 1 to 3, **characterized in that** the tension-proof strand (2) is pulled from the carrier (1) after winding the cable (SK) or the cryostat (KR) off from the drum.

6. Method according to claim 4 or 5, **characterized in that** the cable (SK) first is fixed at its ends to devices of a transmission path, before the tension-proof strand (2) is separated from the cable (SK) or is pulled out of the carrier (1).

## Revendications

1. Procédé de fabrication d'un câble supraconducteur (SK), lequel est équipé de moyens servant à compenser les variations de longueur liées à la température qui se produisent lors du refroidissement du câble de la température ambiante à la température de travail et inversement, procédé lors duquel est utilisé un câble supraconducteur (SK) pourvu d'un support (1) central de forme tubulaire, lequel est entouré par au moins un conducteur supraconducteur, et lors duquel au moins un brin (2) résistant à la traction est disposé dans le support (1) sur toute sa longueur, **caractérisé en ce**
- **que** le câble (SK), y compris le brin (2), est initialement enroulé sur une bobine (SP) à température ambiante,
- **que** le brin (2) est ensuite fixé aux deux extrémités du câble (SK) de manière immuable par rapport à celui-ci et
- **que** le câble (SK) est ensuite déroulé de la bobine (SP).

2. Procédé selon la revendication 1, **caractérisé en ce que** le câble (SK) déroulé de la bobine (SP) est introduit dans un cryostat (KR) de forme tubulaire, lequel possède au moins un tube isolé thermiquement qui entoure un espace vide (HR) servant au passage d'un agent réfrigérant.

3. Procédé selon la revendication 1, **caractérisé en ce**
- **que** le câble (SK), avec le brin (2) résistant à la traction disposé dans le support (1), est initialement introduit dans un cryostat (KR) qui possède au moins un tube isolé thermiquement,
- **que** le cryostat (KR) ainsi équipé est ensuite enroulé sur une bobine,
- **que** le brin (2) est ensuite fixé aux deux extrémités du câble (SK) de manière immuable par rapport à celui-ci et
- **que** le cryostat (KR) est ensuite déroulé de la bobine.

4. Procédé selon l'une des revendications 1 à 3, **caractérisé en ce que** le brin (2) résistant à la traction, après avoir déroulé le câble (SK) ou le cryostat (KR) de la bobine, est détaché du câble à au moins une extrémité de celui-ci.

5. Procédé selon l'une des revendications 1 à 3, **caractérisé en ce que** le brin (2) résistant à la traction, après avoir déroulé le câble (SK) ou le cryostat (KR) de la bobine, est tiré hors du support (1).

6. Procédé selon la revendication 4 ou 5, **caractérisé en ce que** le câble (SK) est tout d'abord fixé par ses extrémités à des groupes d'un tronçon de transmission avant que le brin (2) résistant à la traction soit détaché du câble (SK) ou tiré hors du support (1).
